# EUROPÄISCHE PATENTSCHRIFT

(11) **EP 0 679 551 B1**
(45) Veröffentlichungstag und Bekanntmachung des Hinweises auf die Patenterteilung: **11.08.1999**
(21) Anmeldenummer: 95106181.1
(22) Anmeldetag: 26.04.1995
(51) Int. Cl.: B60Q 1/00, B60Q 1/04

(54) **Lichteinheit für Kraftfahrzeuge**
Lighting unit for vehicle
Unité d'éclairage pour véhicule

(30) Priorität: 28.04.1994 DE 4414898
(43) Veröffentlichungstag der Anmeldung: 02.11.1995
(73) Patentinhaber: Hella KG Hueck & Co., 59552 Lippstadt (DE); DaimlerChrysler AG, 70567 Stuttgart (DE)
(72) Erfinder: Jocher, Reiner, D-71134 Aidlingen (DE); Gerstner, Harald, D-71134 Aidlingen (DE); Kemper, Wolfgang, D-59602 Rüthen (DE); Pokraka, Gerd, D-59558 Lippstadt (DE); Schürhoff, Konrad, D-59302 Oelde (DE)

(56) Entgegenhaltungen:
- EP-A- 0 160 918
- DE-A- 3 328 788
- DE-A- 4 108 007
- DE-A- 4 120 503
- DE-B- 1 101 984

## Beschreibung

Die Erfindung betrifft eine Lichteinheit für Kraftfahrzeuge, mit einem ersten und zweiten Scheinwerfer und einer in Anbaulage der Lichteinheit oberhalb des ersten Scheinwerfers angeordneten Leuchte, mit einem für die Scheinwerfer und die Leuchten gemeinsamen topfförmigen Gehäuse, mit einem um mindestens eine Achse verschwenkbaren Reflektor des ersten und zweiten Scheinwerfers und einem Reflektor der Leuchte, mit einer den Reflektor des ersten Scheinwerfers und des Reflektors der Leuchte gemeinsam abdeckenden, schalenförmigen, lichtdurchlässigen Abschlußscheibe, welche einen zum Gehäuse hin gerichteten umlaufenden Seitenrand aufweist, mit einem die Abschlußscheibe tragenden Rahmen, welcher umlaufend auf den äußeren Rand des Gehäuses aufgesetzt ist und der Form und Größe der Lichtaustrittsöffnungen der Reflektoren entsprechende Öffnungen aufweist und mit einer zwischen dem ersten Scheinwerfer und der Leuchte angeordneten lichtundurchlässigen Trennwand, welche von der Vorderseite der Lichteinheit her gesehen bis nahe an die äußeren Seitenränder der Abschlußscheibe heranreicht.

Aus der DE 34 17 041 C2 sind eine erste und eine zweite Lichteinheit vorbekannt. Die erste Lichteinheit besteht im wesentlichen aus einem Gehäuse, aus zumindest einem in dem Gehäuse angeordneten verschwenkbaren Reflektor eines Scheinwerfers und aus einer schalenförmigen, lichtdurchlässigen Abschlußscheibe, welche mit ihrem äußeren umlaufenden Rand auf den äußeren Rand des Gehäuses aufgesetzt ist und an diesem befestigt ist. Die erste Lichteinheit ist wegen ihrer einzigen schalenförmigen, lichtdurchlässigen Abschlußscheibe nur hinter einer einzigen Karosserieöffnung in die Karosserie einbaubar und kann bei ihrem Einbau so zum vorderen Rand der Karosserieöffnung ausgerichtet werden, daß die schalenförmige Abschlußscheibe mit ihrer Vorderseite bündig zu der an sie angrenzenden Außenseite der Karosserie verläuft und daß zwischen der Abschlußscheibe und der Karosserieöffnung umlaufend ein gleich großer Spalt besteht. Die Abschlußscheibe bleibt auch bei einem Verschwenken der Reflektoren des Scheinwerfers unverändert in ihrer Anbaulage, da die Reflektoren mit dem Gehäuse verbunden sind. Demgegenüber weist die zweite Lichteinheit zwei separate verschwenkbare Scheinwerfer auf, von denen jeder im wesentlichen aus einem Reflektor und einer lichtdurchlässigen Abschlußscheibe besteht, welche mit ihrem äußeren umlaufenden Rand auf den äußeren Rand des Reflektors aufgesetzt ist und zusammen mit diesem eine starre Einheit bildet. Die beiden separaten Scheinwerfer sind mit einem gemeinsamen Tragrahmen verschwenkbar verbunden. Die zweite Lichteinheit kann hinter zwei Karosserieöffnungen in die Karosserie eingesetzt werden, wobei die beiden Scheinwerfer mit ihrer Abschlußscheibe in jeweils eine der beiden Karosserieöffnungen hineinragen. Da bei der zweiten Lichteinheit beim Verschwenken der Reflektoren die fest mit ihnen verbundenen Abschlußscheiben mitschwenken, ist es nur in einer ganz bestimmten Stellung der Reflektoren möglich, daß die Abschlußscheiben mit ihrer Vorderseite bündig zu der an sie angrenzenden Außenseite der Karosserie verlaufen und ein zwischen den Abschlußscheiben und der jeweiligen Karosserieöffnung bestehender Spalt umlaufend gleich groß ist. Außerdem sind Verstelleinrichtungen der beiden Scheinwerfer nicht wie bei der ersten Lichteinheit in einem Gehäuse geschützt angeordnet, so daß beim Einbau der zweiten Lichteinheit in die Fahrzeugkarosserie die Verstelleinrichtungen leicht beschädigt werden können. Soll die erste und zweite Lichteinheit eine Leuchte, zum Beispiel eine Blinkleuchte, aufweisen, so muß diese als zusätzliches Teil seitlich an der Lichteinheit befestigt werden. Zwischen einer lichtdurchlässigen Abschlußscheibe der Leuchte und der an sie angrenzenden Abschlußscheibe des Scheinwerfers, würde dann ein störender Spalt bestehen. Die letzteren Nachteile sind bei der aus dem deutschen Patent Nr. 11 01 984 bekanntgewordenen Lichteinheit, von welcher wir bei der Bildung des Oberbegriffs des Anspruchs 1 ausgegangen sind, beseitigt. Bei dieser Lichteinheit sind die Reflektoren der beiden Scheinwerfer und der Reflektor der Leuchte in ein gemeinsames Gehäuse eingesetzt und die Reflektoren sind gemeinsam durch eine schalenförmige Abschlußscheibe abgedeckt. Die Abschlußscheibe ist mit ihrem äußeren umlaufenden Rand unter Zwischenschaltung einer Ringdichtung auf den äußeren umlaufenden Rand eines Rahmens aufgesetzt und an diesem befestigt. Der Rahmen ist wiederum mit seinem äußeren umlaufenden Rand auf den äußeren umlaufenden Rand des Gehäuses aufgesetzt und an diesem lösbar befestigt. Die drei Reflektoren der Lichteinheit sind in ihrer Anbaulage übereinander angeordnet, wobei der Reflektor der Leuchte der oberste ist. In den Rahmen ist für jeden Reflektor jeweils eine Öffnung eingebracht. Der Reflektor der Leuchte liegt mit seinem äußeren umlaufenden Rand an dem Rand der oberen Öffnung des Rahmens an und ist mit dem Rahmen starr verbunden, während die beiden Reflektoren der Scheinwerfer mit ihrem äußeren umlaufenden Rand mit einem so großen Spiel in die Öffnung hineinragen, daß zwischen ihnen und dem Rand der jeweiligen Öffnung ein sichtbarer Spalt besteht. Dieser Spalt ist notwendig, da der in die Öffnung des Rahmens hineinragende Reflektor der Scheinwerfer verschwenkbar mit dem Rahmen verbunden ist. Außerdem ist wegen dem notwendigen Spalt die Lichtaustrittsfläche der Reflektoren der Scheinwerfer entsprechend kleiner gestaltet als die Öffnungen des Rahmens es zulassen würden. Darüber hinaus sind die drei Öffnungen des Rahmens und somit auch die Lichtaustrittsflächen der drei Reflektoren zusammen wesentlich kleiner als die lichttechnisch wirksame Vorderseite der Abschlußscheibe. Der Raum zwischen den Reflektoren ist von dem sie tragenden Rahmen eingenommen, da dieser in sich verwindungssteif sein muß. Zwischen der Leuchte und dem ihr benachbarten Scheinwerfer ist an die Vorderseite des Rahmens eine lichtundurchlässige Trennwand angeformt, welche horizontal verläuft und sich bis nahe zu den Seitenrändern und der Vorderseite der schalenförmigen Abschlußscheibe hin erstreckt. Die lichtundurchlässige Trennwand dient einerseits zur Abschirmung von Lichtstrahlen zwischen den beiden durch die Trennwand getrennten Reflektoren und verhindert andererseits den Blick von oben auf eine Lichtquelle des unterhalb der Trennwand angeordneten Reflektors des einen Scheinwerfers. Zwischen dem Reflektor der Leuchte und der Abschlußscheibe ist eine lichtdurchlässige Scheibe, welche als Filter für die Leuchte dient, an dem Rand der den Reflektor der Leuchte aufnehmenden Öffnung befestigt. Die lichtdurchlässige Scheibe weist von der Vorderseite der Lichteinheit her gesehen eine der Lichtaustrittsfläche des Reflektors entsprechende Größe auf und verläuft mit ihrer Vorderseite sehr nahe der lichtdurchlässigen Abschlußscheibe. Da zwischen der lichtdurchlässigen Scheibe und der Trennwand ein Spalt und zwischen der Trennwand und der Innenseite des Reflektors eine Trennstelle besteht, ist bei einem Blick durch die Abschlußscheibe hindurch kein harmonisches Bild der Lichteinheit gegeben. Bei einer Beschädigung der Abschlußscheibe und des sie tragenden Rahmens müssen die Reflektoren und ihre Verstelleinrichtungen mit ausgewechselt werden.

Aus der DE 41 08 007 A1 ist ein Scheinwerfer bekannt, bei welchem sein Reflektor mit einem Gehäuse schwenkbar verbunden ist. Eine schalenförmige, lichtdurchlässige Abschlußscheibe ist mit ihrem äußeren umlaufenden Rand in eine Aufnahmerinne eines Rahmens eingesetzt und in dieser mit dem Rahmen verklebt. Der Rahmen ist wiederum auf der dem Gehäuse zugewandten Seite an seinem äußeren umlaufenden Rand mit einer umlaufenden Aufnahmerinne versehen, welche zur Aufnahme einer an dem äußeren umlaufenden Rand des Gehäuses anliegenden Ringdichtung dient. In den Rahmen ist eine bis zu den Seitenrändern der schalenförmigen Abschlußscheibe sich erstreckende Öffnung für den Reflektor eingebracht. An den Rand der Öffnung des Rahmens ist ein Kragen angeformt, welcher in die Abschlußscheibe hineinragt und mit einem freien Randabschnitt auf den Öffnungsrand des Reflektors zu gerichtet ist.

Bei der aus der DE 41 20 503 A1 bekannten Lichteinheit für Kraftfahrzeuge sind zwei Scheinwerfer nebeneinander angeordnet. Die Reflektoren der Scheinwerfer sind verschwenkbar mit dem Gehäuse verbunden und durch eine gemeinsame schalenförmige, lichtdurchlässige Abschlußscheibe abgedeckt. Die Abschlußscheibe ist mit ihrem äußeren umlaufenden Rand in eine äußere umlaufende Aufnahmerinne eines Rahmens eingesetzt. Der Rahmen ist aus Kunststoff hergestellt und mit seinem äußeren umlaufenden Rand auf dem äußeren umlaufenden Rand des Gehäuses dicht aufgesetzt. Die beiden Reflektoren der Scheinwerfer sind jeweils hinter einer Öffnung des Rahmens angeordnet, in welche jeweils eine lichtdurchlässige Scheibe eingesetzt ist. In die bekannte Lichteinheit ist keine Leuchte integriert und wegen ihrer einzigen schalenförmigen Abschlußscheibe nicht hinter zwei Karosserieöffnungen in die Karosserie einsetzbar.

Aufgabe der Erfindung ist es, die im Oberbegriff des Anspruchs 1 beschriebene Lichteinheit für Kraftfahrzeugscheinwerfer derart zu verbessern, daß die Lichteinheit unter Beibehaltung eines gemeinsamen Gehäuses für die Reflektoren der Scheinwerfer und für den Reflektor der Leuchte hinter zwei Karosserieöffnungen in die Fahrzeugkarosserie einsetzbar ist und in beiden Karosserieöffnungen mit der Vorderseite einer in die Karosserieöffnung hineinragenden lichtdurchlässigen Abschlußscheibe, die bei einem Verschwenken der Reflektoren eine unveränderbare Lage zur angrenzenden Karosserie einnimmt, bündig zur angrenzenden Karosserie verlaufen kann. Außerdem sollen bei einer Beschädigung der Vorderseite der Lichteinheit nicht die Reflektoren und ihre Einstelleinrichtungen mit ausgewechselt werden müssen. Ferner soll sowohl die Lichtausbeute beider Scheinwerfer und der Leuchte möglichst groß sein, als auch bei einem Blick durch die in die beiden Karosserieöffnungen einsetzbare lichtdurchlässige Abschlußscheibe hindurch weder ein zwischen den Reflektoren der Scheinwerfer und den Öffnungen des Rahmens bestehender Spalt, noch ein Spalt zwischen dem Reflektor des ersten Scheinwerfers und dem Reflektor der Leuchte zu sehen sein. Letzteres soll auch möglich sein, wenn zwischen der Leuchte und dem ersten Scheinwerfer kein Rahmenteil verläuft. Diese Aufgabe wird erfindungsgemäß durch folgende Merkmale gelöst:
- der Reflektor des ersten und zweiten Scheinwerfers und der Leuchte ist an dem für die Scheinwerfer und die Leuchte gemeinsamen Gehäuse befestigt,
- in den Rahmen ist eine gemeinsame erste Öffnung für den Reflektor des ersten Scheinwerfers und den Reflektor der Leuchte und eine zweite Öffnung für den Reflektor des zweiten Scheinwerfers eingebracht,
- den beiden Öffnungen des Rahmens ist jeweils eine tiefe schalenförmige, lichtdurchlässige Abschlußscheibe zugeordnet, welche mit ihrem äußeren umlaufenden Rand an den Rand der jeweiligen Öffnung des Rahmens angrenzen,
- an den Rändern der beiden Öffnungen des Rahmens ist umlaufend ein Kragen angeformt, welcher in die schalenförmige Abschlußscheibe hineinragt und mit einem freien Randabschnitt auf den Umfangsrand der Reflektoren des Scheinwerfers zu gerichtet ist,
- der Reflektor der Leuchte und der Reflektor des ersten Scheinwerfers weisen eine gemeinsame Umfangslinie und benachbarte Seitenrandabschnitte auf, welche von der Vorderseite der Lichteinheit her gesehen bis zur Umfangslinie aneinander grenzen,
- die lichtundurchlässige Trennwand ist von einem Seitenrand der sich benachbarten Reflektoren des ersten Scheinwerfers und der Leuchte gebildet.

Bei einer solchen Lichteinheit verändert sich bei einem Verstellen der Reflektoren nicht die Lage der schalenförmigen Abschlußscheibe zu der an sie angrenzenden Karosserie. Deswegen kann zwischen den beiden Abschlußscheiben und der an sie angrenzenden Karosserie umlaufend ein sehr kleiner Spalt gewählt werden. Die Lichtausbeute der Scheinwerfer und der Leuchte ist sehr groß, da die Lichtaustrittsfläche der drei Reflektoren zusammen nur etwas kleiner ist als die lichttechnisch wirksame Vorderseite von beiden schalenförmigen Abschlußscheiben zusammen. Der an den Rand der beiden Öffnungen des Rahmens angeformte Kragen deckt bei einem Blick durch die Vorderseite der beiden Abschlußscheiben sowohl den entgegen der Lichtaustrittsrichtung gerichteten Seitenrand der schalenförmigen Abschlußscheibe als auch den zwischen dem Rand der Öffnung des Rahmens und dem äußeren Rand der Reflektoren einsehbaren Raum des Inneren der Lichteinheit ab. Die Lichteinheit baut vertikal nicht so hoch, wenn der zweite Scheinwerfer seitlich neben dem ersten Scheinwerfer angeordnet ist.

Bei einer Lichteinheit mit einer lichtdurchlässigen Scheibe, welche zwischen dem Reflektor der Leuchte und der Abschlußscheibe angeordnet ist, an dem Rahmen befestigt ist und von ihrer Vorderseite her gesehen, die gesamte Lichtaustrittsfläche des Reflektors des ersten Scheinwerfers abdeckt, ist es weiterhin vorteilhaft, wenn die lichtdurchlässige Scheibe von der Vorderseite der Lichteinheit her gesehen sich bis zum oberen Rand des Reflektors des ersten Scheinwerfers hin erstreckt. Bei einem Blick durch die Abschlußscheibe hindurch, ist der Übergang zwischen der Leuchte und dem ersten Scheinwerfer sehr harmonisch, da die lichtdurchlässige Scheibe nicht nur den Leuchtenreflektor sondern auch auch die Trennwand und die Übergangsstelle zwischen dem Reflektor der Leuchte und dem Reflektor des ersten Scheinwerfers abdeckt. Um eine gute Durchsicht durch die optische Scheibe zu verhindern, ist es sinnvoll, diese mit lichtstreuenden optischen Mitteln zu versehen. Um ein einheitliches Farbbild zwischen der Leuchte und dem unterhalb der Leuchte angeordneten ersten Scheinwerfer zu bekommen, ist es weiterhin zweckmäßig, wenn die lichtdurchlässige Scheibe farblos ist und die Innenseite des Reflektors der Leuchte und des Reflektors des ersten Scheinwerfers mit einer zumindest annähernd gleich aussehenden glänzenden Oberfläche versehen ist.

Bei einer besonders vorteilhaften Weiterbildung der Erfindung ist der Reflektor der Leuchte ein an dem Gehäuse befestigtes separates Teil und seine untere Seitenwand bildet die Trennwand, welche mit ihrem freien Endabschnitt sich in die Öffnung des Randes hineinerstreckt und nach unten hin gerichtet und so Lang ausgeführt ist, daß ihr freier Endabschnitt als Abdeckung für einen zwischen den beiden Reflektoren bestehenden Spalt dient. Hierbei ist es vorteilhaft, wenn von der Vorderseite der Lichteinheit her gesehen das freie Ende der Trennwand annähernd deckungsgleich mit der unteren Kante der lichtdurchlässigen Scheibe der Leuchte verläuft. Um das harmonische Gesamtbild der Leuchteneinheit zu vervollkommnen, ist es weiterhin vorteilhaft, wenn die Trennwand mit ihrem als Abdeckung dienenden freien Endabschnitt in ihrem Querschnitt in einem Bogen verläuft, dessen konvexe Seite zur Abschlußscheibe hin gerichtet ist und sowohl die nach oben und zur Abschlußscheibe hin gerichtete Seite der Trennwand des Reflektors der Leuchte mit einer Oberfläche versehen ist, welche einer hochglänzenden Oberfläche des Reflektors der Leuchte entspricht und in diese übergeht, als auch der an die Ränder der beiden Öffnungen des Rahmens angeformte Kragen, auf den von der Vorderseite der Lichteinheit her zu sehenden Seite mit einer glänzenden Oberfläche versehen ist, welche dem Aussehen nach der glänzenden Oberfläche der Reflektoren annähernd entspricht.

Ein weiterer Vorteil ist es, wenn der an die Ränder der beiden Öffnungen des Rahmens angeformte Kragen im Bereich des Reflektors des ersten und zweiten Scheinwerfers im Querschnitt V-förmig ausgeführt ist, wobei die V-Form mit ihrem Scheitel in Lichtaustrittsrichtung weist und im Bereich des Reflektors der Leuchte ausschließlich ein in die Abschlußscheibe hineinragender Schenkel ist. Hierbei ist es zweckmäßig, wenn der ortsfeste Reflektor der Leuchte mit seinem oberen Seitenrand entgegen der Lichtaustrittsrichtung gesehen, in einem Abstand annähernd fluchtend hinter dem Kragen liegt. Dadurch ist einerseits die Lichtaustrittsfläche des Reflektors der Leuchte so groß wie möglich gestaltet und andererseits kann die lichtdurchlässige Scheibe der Leuchte an dem Rand der Öffnung des Rahmens befestigt werden, wodurch der Rahmen die lichtdurchlässige Scheibe vibrationsfrei halten kann. Ist der Reflektor der Leuchte unverstellbar mit dem Gehäuse verbunden, so ist es vorteilhaft, wenn er sich mit seinem äußeren umlaufenden Rand bis zu dem an den Rand der Öffnung des Rahmens angeformten Kragen hin erstreckt. Vorteilhaft ist es weiterhin, wenn die äußere umlaufende Seitenwand des Reflektors der Leuchte ein Abschnitt eines Hohlzylinders bzw. eines Hohlkegels ist, und die zwischen dem Reflektor der Leuchte und dem Reflektor des ersten Scheinwerfers verlaufende Trennwand von der Vorderseite her gesehen bogenförmig verläuft, wobei ihre konvexe Seite nach oben hin gerichtet ist. Dadurch ist bei einer ausreichenden Lichtausbeute der Leuchte eine gute Lichtausbeute für den ersten Scheinwerfer, welcher ein abgeblendeter Scheinwerfer sein kann, gegeben.

Zudem ist es vorteilhaft, wenn die beiden schalenförmigen Abschlußscheiben mit ihrem umlaufenden äußeren Rand an dem Rand der Öffnungen des Rahmens anliegen und mit diesem verklebt sind und wenn der Rahmen dicht an dem äußeren Rand des Gehäuses anliegt und mit diesem lösbar verbunden ist. Dadurch bilden die beiden Abschlußscheiben und der Rahmen eine feste Einheit, welcher bei einer Beschädigung leicht und schnell ausgewechselt werden kann.

Außerdem ist es vorteilhaft, wenn der Rahmen auf seiner Vorderseite jeweils eine die Öffnungen umgebende Aufnahmerinne und auf seiner Rückseite eine an seinem äußeren Rand verlaufende Aufnahmerinne für eine Ringdichtung aufweist, wobei der Rahmen bis auf den zwischen beiden Öffnungen verlaufenden Wandabschnitt im Querschnitt H-förmig ausgeführt ist und die offenen Seiten der H-Form die jeweilige Aufnahmerinne bilden. Dadurch baut der Rahmen in seiner Höhe sehr klein und ist dennoch ausreichend verbindungssteif.

Bei einer besonders vorteilhaften Weiterbildung der Erfindung sind die beiden schalenförmigen Abschlußscheiben durch mindestens einen sie verbindenden Wandabschnitt einstückig hergestellt. Dadurch kann der Abstand der beiden schalenförmigen Abschlußscheiben zueinander sehr eng toleriert werden und somit kann die Lichteinheit hinter zwei Karosserieöffnungen so justiert werden, daß die beiden schalenförmigen Lichtscheiben in die jeweilige Karosserieöffnung hineinragen und zwischen beiden lichtdurchlässigen Abschlußscheiben und der an sie angrenzenden Karosserie umlaufend ein gleich breiter Spalt besteht.

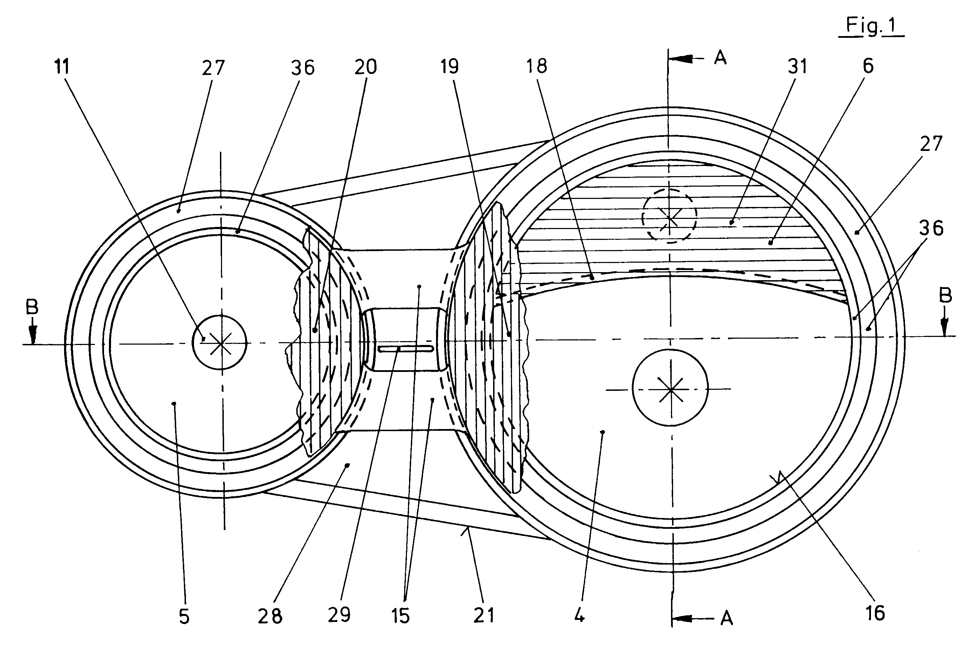

Ein Ausführungsbeispiel der Erfindung ist in der Zeichnung dargestellt, und zwar zeigen
- Figur 1: eine Vorderseite einer Lichteinheit für Kraftfahrzeuge, mit zwei seitlich nebeneinander angeordneten Scheinwerfern und mit einer über einem Scheinwerfer angeordneten Leuchte;

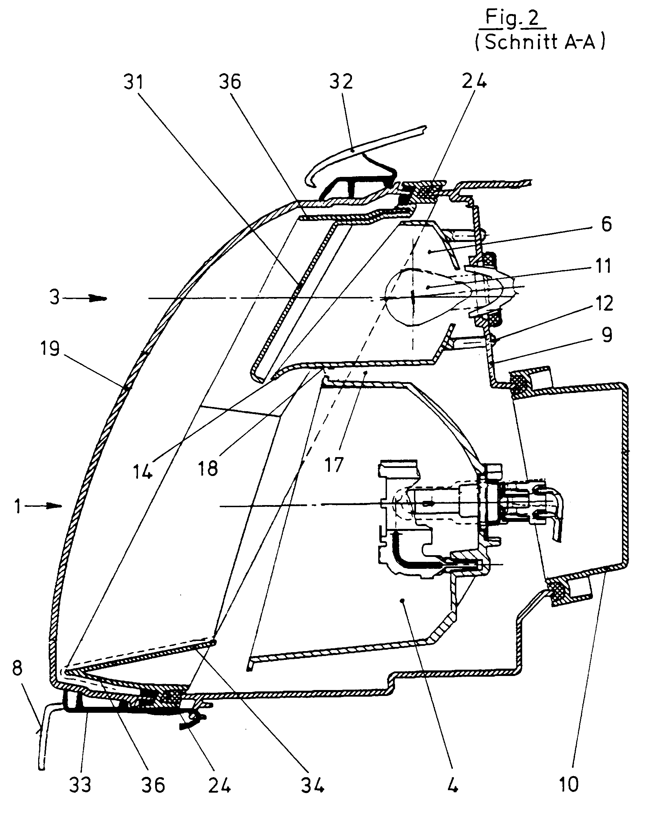

- Figur 2: einen vertikalen Schnitt nach der Linie A-A durch die Leuchte und den unter ihr angeordneten Scheinwerfer und

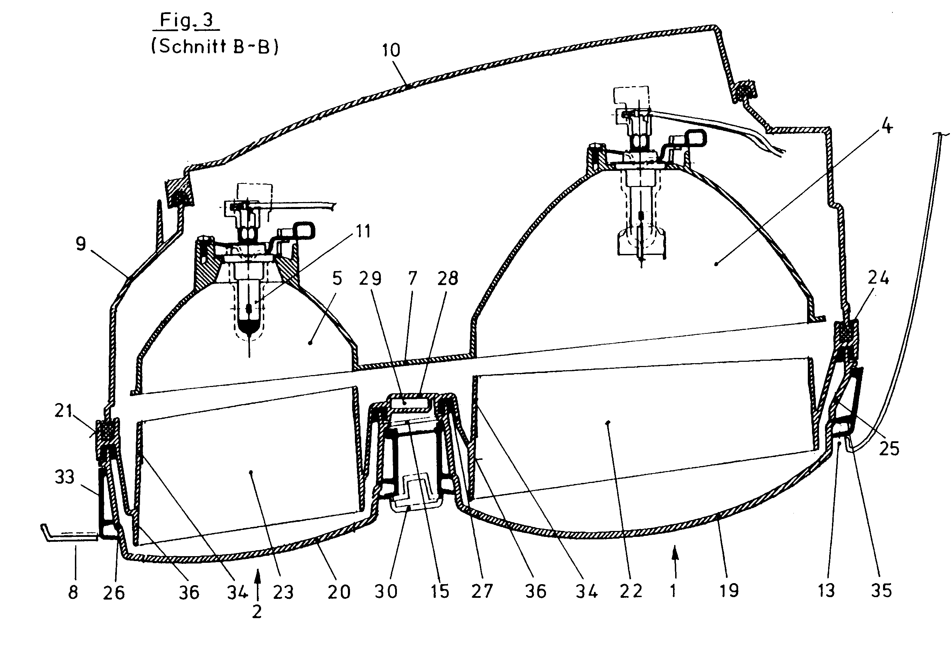

- Figur 3: einen horizontalen Schnitt nach der Linie B-B durch die seitlich nebeneinander angeordneten Scheinwerfer.

Die Lichteinheit für Kraftfahrzeuge besteht aus einem ersten und zweiten Scheinwerfer (1, 2) und einer in Anbaulage der Lichteinheit oberhalb des ersten Scheinwerfers (1) angeordneten Leuchte (3). Die beiden Scheinwerfer (1, 2) und die Leuchte (3) weisen jeweils einen schalenförmigen Reflektor (4, 5 bzw. 6) auf. Die Reflektoren (4, 5) der beiden Scheinwerfer (1, 2) sind seitlich nebeneinander angeordnet und durch eine sie verbindende Wand (7) einstückig hergestellt. Die beiden Reflektoren sind über Verstelleinrichtungen (nicht dargestellt) mit einem aus Kunststoff hergestellten Gehäuse (9) verbunden. Durch die Verstelleinrichtungen sind die Reflektoren (4, 5) der Scheinwerfer (1, 2) um eine horizontale und vertikale Achse verschwenkbar. Eine in die Rückseite des Gehäuses (9) eingebrachte Öffnung ist durch einen Deckel (10) verschlossen. Nach einer Demontage des Deckels (10) kann von der Rückseite der Lichteinheit her ein Wechsel der in einer Öffnung der Reflektoren (4, 5) der Scheinwerfer eingesetzten Lampe vorgenommen worden. Oberhalb des Reflektors (4) des ersten Scheinwerfers (1) ist der schalenförmige Reflektor (6) der Leuchte angeordnet, welcher mit seiner Rückseite an der Innenseite des Gehäuses (9) mittels Schrauben (12) unverstellbar befestigt ist. Die drei Reflektoren (4, 5, 6) weisen umlaufend eine zylinderartige Seitenwand auf. Die Reflektoren (4, 5) des Scheinwerfers verlaufen mit ihrem äußeren Rand in einer Ebene, welche etwa parallel zu der Ebene verläuft, in welcher das Gehäuse (9) mit ihrem äußeren umlaufenden Rand liegt. Der Reflektor (5) des zweiten Scheinwerfers (2) weist an seiner Lichtaustrittsfläche eine kreisförmige Umfangslinie auf. Während die Lichtaustrittsfläche des Reflektors (4) des ersten Scheinwerfers (1) und die Lichtaustrittsfläche des Reflektors (6) der Leuchte (3) zusammen eine kreisförmige Umfangslinie (16) bilden. Die Umfangslinien können auch oval verlaufen. Die sich zugewandten Seitenwandabschnitte des Reflektors (4) des ersten Scheinwerfers (1) und des Reflektors (6) der Leuchte (3) sind durch einen kleinen Spalt (17) voneinander getrennt. Der kleine Spalt (17) verläuft von der Vorderseite der Lichteinheit her gesehen annähernd horizontal und etwas nach oben hin durchgebogen. Der den kleinen Spalt (17) begrenzende untere Seitenwandabschnitt des Reflektors (6) der Leuchte (3) ragt in Lichtaustrittsrichtung über den ihm benachbarten Seitenrand des Reflektors (4) des ersten Scheinwerfers (1) und verläuft mit seinem vorderen Endabschnitt (14) zum Reflektor (4) hin gebogen. Die untere Seitenwand des Reflektors (6) der Leuchte (3) ist eine lichtundurchlässige Trennwand (18) deren Endabschnitt (14) von der Vorderseite der Lichteinheit gesehen zur Abdeckung des zwischen den beiden Reflektoren (4, 6) bestehenden Spaltes (17) dient.

Auf den umlaufenden äußeren Rand des Gehäuses (9) ist ein zwei tiefe, schalenförmige, lichtdurchlässige Abschlußscheiben (19, 20) tragender Rahmen (21) aufgesetzt. In den Rahmen (21) ist für den Reflektor (4) des ersten Scheinwerfers (1) und den Reflektor (6) der Leuchte (3) eine gemeinsame erste Öffnung (22) und für den Reflektor (5) des zweiten Scheinwerfers (2) eine zweite Öffnung (23) eingebracht. Der Rahmen (21) ist aus Kunststoff hergestellt und weist auf der Seite des Gehäuses (9) an seinem äußeren Rand umlaufend eine Aufnahmerinne (24) auf, in welche eine Ringdichtung eingesetzt ist. Der Rahmen (21) liegt mit der Ringdichtung dicht an dem äußeren Rand des Gehäuses (9) an und ist an dem Gehäuse (9) lösbar befestigt. Die Lösbare Verbindung besteht aus selbstrastenden Halteelementen und aus sich überlappenden Halteelementen des Gehäuses (9) und des Rahmens (21), welche durch eine Befestigungsschraube an dem Karosserieteil (8) befestigbar sind (nicht dargestellt). Die tiefen schalenförmigen Abschlußscheiben (19, 20) sind aus Kunststoff hergestellt und mit dem freien Ende ihrer Seitenränder (25, 26) in jeweils eine Aufnahmerinne (27) eingeklebt, welche die Öffnungen (22, 23) des Rahmens (21) umgeben. Der Rahmen (21) weist bis auf den seine beide Öffnungen (22, 23) verbindenden Wandabschnitt (28) einen H-förmigen Querschnitt auf, wobei in der einen geöffneten Seite der H-Form die Aufnahmerinne (24) für die Ringdichtung und in die andere offene Seite der H-Form die Aufnahmerinne (27) für die Abschlußscheiben (19, 20) verläuft. In den zwischen beiden Abschlußscheiben (19, 20) verlaufenden Wandabschnitt (28) des Rahmens (21) ist eine nach oben geöffnete Tasche eingebracht, in welche ein den Zwischenrahmen mit einem Karosseriearm (30) eines Karosserieteils (8) verbindendes Befestigungselement (nicht dargestellt) eingreift. Der Karosseriearm (30) erstreckt sich von unten zwischen die beiden Abschlußscheiben (19, 20) und wird von einem Wandabschnitt (nicht dargestellt) einer oberhalb der Lichteinheit verlaufenden Kofferraumklappe (32) überlappt. Die Kofferraumklappe (32) und das Karosserieteil (8) bilden somit zusammen zwei Karosserieöffnungen in welche die beiden Abschlußscheiben (19, 20) hineinragen. An den Seitenrändern (25, 26) der schalenförmigen Abschlußscheiben (19, 20) liegt außen jeweils eine Ringdichtung (33) an, welche über einen zwischen ihnen verlaufenden Steg einstückig hergestellt sind. Die Ringdichtungen (33) erstreckten sich ausgehend von dem Rahmen (21) in einem Abstand zu den Seitenrändern (25 bzw. 26) der Abschlußscheiben (19 bzw. 20) in Lichtaustrittsrichtung und weisen an ihrem freien Ende zwei radial nach innen gerichtete Lippen (35) auf. Die Lippen (35) sind zumindest so lang ausgeführt, daß von der Vorderseite der Lichteinheit gesehen, der zwischen den beiden Karosserieöffnungen (33) und der in sie hineinragenden Abschlußscheibe (19 bzw. 20) bestehenden Spalt (17) ausgefüllt ist. Der innere Schenkel der Aufnahmerinne (27) für die beiden Abschlußscheiben (19, 20) geht in einen umlaufenden Kragen (36) über, welcher sich tief in die schalenförmige Abschlußscheibe (19, 20) hineinerstreckt und nahe ihren Seitenrändern (25 bzw. 26) verläuft. Die Kragen (36) weisen mit einem Randabschnitt (34) auf den äußeren Rand der schalenförmigen Reflektoren (4, bzw. 5) der Scheinwerfer zu. Die beiden Kragen (36) und der an sie angeformte Randabschnitt (34) dienen als Abdeckung für den zwischen dem Rahmen (21) und dem äußeren Rand der Reflektoren (4, 5) bestehenden Spalt. Der Kragen ist auf der von der Vorderseite der Lichteinheit her zu sehenden Seite wie die Innenseite der Reflektoren (4, 5, 6) und wie die zwischen den Reflektoren (4, 5) verlaufende Trennwand (18) mit einer glänzenden Oberfläche versehen.

Der Reflektor (6) der Leuchte überragt mit seiner Trennwand (18) nicht nur den Reflektor (4) des ersten Scheinwerfers (1), sondern ragt auch in die Öffnung (22) des Rahmens (21) hinein, während er mit seiner oberen Seitenwand in einem Abstand fluchtend hinter dem Kragen (36) liegt, welcher im Bereich des Reflektors (6) der Leuchte ausschließlich ein in die Abschlußscheibe (19) ragender Schenkel ist. Zwischen dem Reflektor (6) der Leuchte und der Abschlußscheibe (19) ist ein mit das Licht streuenden optischen Mitteln versehende lichtdurchlässige Scheibe (31) angeordnet, welche die gesamte Lichtaustrittsfläche des Reflektors (6) der Leuchte und die einstückig mit dem Reflektor (6) ausgeführte Trennwand (18) mit einem zum Reflektor (4) hin ausgebogenen Endabschnitt (14) abdeckt. Der Endabschnitt (14) der Trennwand (18) erstreckt sich mit seinem freien Ende so weit nach unten hin, daß er den zwischen beiden Reflektoren (4, 5) bestehenden Spalt (17) abdeckt. Die lichtdurchlässige Scheibe (31) ist am Rand der Öffnung (23) des Rahmens (21) am Kragen (36) befestigt. In den Reflektor (6) der Leuchte (3) ist eine zur Aufnahme einer Lampe (11) dienende Öffnung angebracht. Die Lampe (11) ist von einem Gelbfilter (nicht dargestellt) umgeben.

### Bezugszeichenliste

- 1: erster Scheinwerfer
- 2: zweiter Scheinwerfer
- 3: Leuchte
- 4: Reflektor
- 5: Reflektor
- 6: Reflektor
- 7: Wand
- 8: Karosserieteil
- 9: Gehäuse
- 10: Deckel
- 11: Lampe
- 12: Schraube
- 13: Spalt
- 14: Endabschnitt
- 15: Wandabschnitt
- 16: Umfangslinie
- 17: Spalt
- 18: Trennwand
- 19: Abschlußscheibe
- 20: Abschlußscheibe
- 21: Rahmen
- 22: Öffnung
- 23: Öffnung
- 24: Aufnahmerinne
- 25: Seitenrand
- 26: Seitenrand
- 27: Aufnahmerinne
- 28: Wandabschnitt
- 29: Tasche
- 30: Karosserieteil
- 31: Scheibe
- 32: Kofferraumklappe
- 33: Ringdichtung
- 34: Randabschnitt
- 35: Lippe
- 36: Kragen

## Patentansprüche

1. Lichteinheit für Kraftfahrzeuge mit einem ersten und zweiten Scheinwerfer (1, 2) und einer in Anbaulage der Lichteinheit oberhalb des ersten Scheinwerfers (1) angeordneten Leuchte (3), mit einem für die Scheinwerfer (1, 2) und die Leuchte (3) gemeinsamen topfförmigen Gehäuse (9), mit einem um mindestens eine Achse verschwenkbaren Reflektor (4, 5) des ersten und zweiten Scheinwerfers (1, 2) und einem Reflektor (6) der Leuchte (3) mit einer den Reflektor (4) des ersten Scheinwerfers (1) und des Reflektors (6) der Leuchte (3) gemeinsam abdeckenden, schalenförmigen, lichtdurchlässigen Abschlußscheibe (19), welche einen zum Gehäuse (9) hin gerichteten umlaufenden Seitenrand (25) aufweist, mit einem die Abschlußscheibe (19) tragenden Rahmen (21), welcher umlaufend an dem äußeren Rand des Gehäuses (9) aufgesetzt ist und der Form und Größe der Lichtaustrittsöffnungen der Reflektoren (4, 5, 6) entsprechende Öffnungen (22, 23) aufweist, und mit einer zwischen dem ersten Scheinwerfer (1) und der Leuchte (3) angeordneten lichtundurchlässigen Trennwand (18), welche von der Vorderseite der Lichteinheit her gesehen bis nahe an die äußeren Seitenränder (25) der Abschlußscheibe (19) heranreicht,
gekennzeichnet durch folgende Merkmale:
- der Reflektor (4, 5 bzw. 6) des ersten und zweiten Scheinwerfers (1, 2) und der Leuchte (3) ist an dem für die Scheinwerfer (1, 2) und die Leuchte (3) gemeinsamen Gehäuse (9) befestigt,
- in den Rahmen (21) ist eine gemeinsame erste Öffnung (22) für den Reflektor (4) des ersten Scheinwerfers (1) und dem Reflektor (6) der Leuchte (3) und eine zweite Öffnung (23) für den Reflektor (5) des zweiten Scheinwerfers (2) eingebracht,
- den beiden Öffnungen (22, 23) des Rahmens (21) ist jeweils eine tiefe schalenförmige, Lichtdurchlässige Abschlußscheibe (19 bzw. 20) zugeordnet, welche mit ihrem äußeren umlaufenden Rand an den Rand der jeweiligen Öffnung (22 bzw. 23) des Rahmen (21) angrenzen,
- an den Rändern der beiden Öffnungen (22, 23) des Rahmens (21) ist umlaufend ein Kragen (36) angeformt, welcher in die schalenförmige Abschlußscheibe (19 bzw. 20) hineinragt und mit einem freien Randabschnitt (34) auf den Umfangsrand des Reflektors (4 bzw. 5) des Scheinwerfers (1, 2) zugerichtet ist,
- der Reflektor (6) der Leuchte (3) und der Reflektor (4) des ersten Scheinwerfers (1) weisen eine gemeinsame Umfangslinie (16) und benachbarte Seitenwandabschnitte auf, welche von der Vorderseite der Lichteinheit her gesehen bis zu der Umfangslinie (16) hin aneinander grenzen,
- die lichtundurchlässige Trennwand (18) ist von einer Seitenwand der sich benachbarten Reflektoren (5, 6) des ersten Scheinwerfers (1) und der Leuchte (3) gebildet.

2. Lichteinheit nach Anspruch 1, mit einer lichtdurchlässigen Scheibe (31), welche zwischen dem Reflektor (6) der Leuchte (3) und der Abschlußscheibe (19) angeordnet ist, an dem Rahmen (21) befestigt ist und von der Vorderseite der Lichteinheit her gesehen, die gesamte Lichtaustrittsfläche des Reflektors (6) der Leuchte (3) abdeckt, dadurch gekennzeichnet, daß die lichtdurchlässige Scheibe (31) von der Vorderseite der Lichteinheit her gesehen, sich bis zur oberen Seitenwand des Reflektors (4) des ersten Scheinwerfers (1) hin erstreckt.

3. Lichteinheit nach Anspruch 1 oder 2, dadurch gekennzeichnet, daß die zwischen der Leuchte (3) und dem ersten Scheinwerfer (1) verlaufende Trennwand (18) mit ihrem freien Endabschnitt sich bis in die Öffnung (22) des Rahmens (21) hineinerstreckt.

4. Lichteinheit nach einem der Ansprüche 1 bis 3, dadurch gekennzeichnet, daß der Reflektor (6) der Leuchte (3) ein an dem Gehäuse (9) befestigtes separates Teil ist und seine untere Seitenwand die Trennwand (18) bildet, welche mit ihrem freien Endabschnitt (14) nach unten hin gerichtet und so lang ausgeführt ist, daß ihr freier Endabschnitt (14) als Abdeckung für einen zwischen den beiden Reflektoren (4, 6) bestehenden Spalt (17) dient.

5. Lichteinheit nach Anspruch 4, dadurch gekennzeichnet, daß die Trennwand (18) mit ihrem als Abdeckung dienenden freien Endabschnitt (14) in ihren in Lichtaustrittsrichtung verlaufenden Querschnitten in einem Bogen verläuft, dessen konvexe Seite zur Abschlußsscheibe (19) hin gerichtet ist.

6. Lichteinheit nach einem der Ansprüche 1 bis 5, dadurch gekennzeichnet, daß die nach oben und zur Abschlußscheibe (19) hin gerichtete Seite der Trennwand (18) des Reflektors (6) mit einer Oberfläche versehen ist, welche einer glänzenden Oberfläche des Reflektors (6) der Leuchte (3) entspricht und in diese übergeht und daß der an die Ränder der beiden Öffnungen (22, 23) des Rahmens (21) angeformte Kragen (36) auf den von der Vorderseite der Lichteinheit zu sehenden Seite mit einer glänzenden Oberfläche versehen ist, welche dem Aussehen nach der glänzenden Oberfläche der Reflektoren (4, 5, 6) annähernd entspricht.

7. Lichteinheit nach einem der Ansprüche 1 bis 6, dadurch gekennzeichnet, daß der an die Ränder der Öffnung (22, 23) des Rahmens (21) angeformte Kragen (36) im Bereich des Reflektors (4, 5) des ersten und zweiten Scheinwerfers (1, 2) im Querschnitt V-förmige ausgeführt ist, wobei die V-Form mit ihrem Scheitel in Lichtaustrittsrichtung weist und im Bereich des Reflektors (6) der Leuchte (3) ausschließlich ein in die Abschlußscheibe (19) hineinragender Schenkel ist.

8. Lichteinheit nach Anspruch 4, dadurch gekennzeichnet, daß der Reflektor (6) der Leuchte (3) mit seiner oberen Seitenwand entgegen der Lichtaustrittsrichtung gesehen, annähernd fluchtend hinter dem Kragen (36) liegt.

9. Lichteinheit nach einem der Ansprüche 1 bis 8, dadurch gekennzeichnet, daß die äußere umlaufende Seitenwand des Reflektors (6) der Leuchte (3) ein Abschnitt eines Hohlzylinders bzw. eines Hohlkegels ist.

10. Lichteinheit nach einem der Ansprüche 1 bis 9, dadurch gekennzeichnet, daß die zwischen den Reflektoren (6) der Leuchte (3) und dem Reflektor (4) des ersten Scheinwerfers (1) verlaufende Trennwand (18) von der Vorderseite der Lichteinheit her gesehen, bogenförmig verläuft, wobei ihre konvexe Seite nach oben hin gerichtet ist.

11. Lichteinheit nach einem der Ansprüche 1 bis 10, dadurch gekennzeichnet, daß die beiden schalenförmigen Abschlußscheiben (19, 20) mit ihrem umlaufenden äußeren Rand an dem Rand der Öffnungen (22, 23) des Rahmens (21) anliegen und mit diesem verklebt sind und daß der Rahmen (21) dicht an dem äußeren Rand des Gehäuses (9) anliegt und mit diesem lösbar verbunden ist.

12. Lichteinheit nach Anspruch 11, dadurch gekennzeichnet, daß der Rahmen (21) auf seiner Außenseite jeweils eine die Öffnungen (22, 23) umgebene Aufnahmerinne (27) und auf seiner Rückseite eine an seinem äußeren Rand umlaufende Aufnahmerinne (24) für eine Ringdichtung aufweist, wobei der Rahmen (21) bis auf den zwischen beiden Öffnungen (22, 23) verlaufenden Wandabschnitt (28) im Querschnitt H-förmig ausgeführt ist und die offenen Seiten der H-Form die jeweilige Aufnahmerinne (27 bzw. 24) bilden.

13. Lichteinheit nach einem der Ansprüche 1 bis 12, dadurch gekennzeichnet, daß die beiden schalenförmigen Abschlußscheiben (19, 20) durch mindestens einen sie verbindenden Wandabschnitt (15) einstückig hergestellt sind.

## Claims

1. Lamp unit for motor vehicles, with a first and second headlamp (1, 2) and a lamp (3) arranged above the first headlamp (1) in the lamp unit mounting position, with a common cup-shaped housing (9) for the headlamps (1, 2) and the lamp (3), with a first and second headlamp (1, 2) reflector (4) which is adapted to be swivelled about at least one axis and a lamp (3) reflector (6) with a dish-shaped, transparent cover plate (19) which jointly covers the reflector (4) of the first headlamp (1) and the reflector (6) of the lamp (3), said cover plate (19) having an all-round lateral rim (25) directed towards the housing (9), with a frame (21) which supports the cover plate (19) and is set all round the outer rim of the housing (9) and features openings (22, 23) which match the shape and size of the openings through which light emerges in the reflectors (4, 5, 6), and with a partition wall (18) arranged between the first headlamp (1) and the lamp (3) and which extends, viewed from the front of the lamp unit, almost as far as the outer lateral rims (25) of the cover plate (19),
characterised by the following features:
- the reflector (4, 5 and 6, respectively) of the first and second headlamp (1, 2) and of the lamp (3) is attached to the common housing (9) for the headlamps (1, 2) and the lamp (3),
- incorporated in the frame (21) is a common first opening (22) for the reflector (4) of the first headlamp (1) and the reflector (6) of the lamp (3) and a second opening (23) for the reflector (5) of the second headlamp (2),
- associated with the two openings (22, 23) in the frame (21) is a respective deep dish-shaped, transparent cover plate (19 and 20, respectively), the outer circumferential rims of which are contiguous with the rim of the respective opening (22 and 23, respectively) of the frame (21),
- formed all round the rims of the two openings (22, 23) of the frame (21) is a collar (36) which projects into the dish-shaped cover plate (19 and 20, respectively) and is directed with a free section of rim (34) at the circumferential rim of the reflector (4 and 5, respectively) of the headlamp (1, 2),
- the reflector (6) of the lamp (3) and the reflector (4) of the first headlamp (1) have a common circumferential line (16) and adjacent side wall sections which, viewed from the front of the lamp unit, are contiguous with one another as far as the circumferential line (16),
- the non-transparent partition wall (18) is constituted by a side wall of the adjoining reflectors (5, 6) of the first headlamp (1) and of the lamp (3).

2. Lamp unit according to claim 1, with a transparent plate (31) which is arranged between the reflector (6) of the lamp (3) and the cover plate (19), is attached to the frame (21) and, viewed from the front of the lamp unit, covers the entire light exit surface of the reflector (6) of the lamp (3), characterised in that the transparent plate (31), viewed from the front of the lamp unit, extends as far as the upper side wall of the reflector (4) of the first headlamp (1).

3. Lamp unit according to claim 1 or 2, characterised in that the partition wall (18) which runs between the lamp (3) and the first headlamp (1) extends by its free end section into the opening (22) in the frame (21).

4. Lamp unit according to any of claims 1 to 3, characterised in that the reflector (6) of the lamp (3) is a separate part attached to the housing (9) and its lower side wall constitutes the partition wall (18), the free end section (14) of which is directed downwards and is constructed long enough for its free end section (14) to act as a cover for a gap (17) between the two reflectors (4, 6).

5. Lamp unit according to claim 4, characterised in that the transverse sections, extending in the direction in which light emerges, of the free end section (14) of the partition wall (18), which free end section (14) acts as a cover, extend in an arc whose convex face is directed towards the cover plate (19).

6. Lamp unit according to any of claims 1 to 5, characterised in that that side of the partition wall (18) of the reflector (6) which is directed upwards and towards the cover plate (19) is provided with a surface which matches a shiny surface of the reflector (6) of the lamp (3) and merges thereinto, and that the collar (36) formed onto the rims of the two openings (22, 23) in the frame (21) is provided on the side visible from the front of the lamp unit with a shiny surface which approximately matches the shiny surface of the reflectors (4, 5, 6) in appearance.

7. Lamp unit according to any of claims 1 to 6, characterized in that the collar (36) formed onto the rims of the opening (22, 23) in the frame (21) is constructed with a V-shaped cross-section in the region of the reflector (4, 5) of the first and second headlamp (1, 2), the apex of the "V" pointing in the direction in which the light emerges and in the region of the reflector (6) of the lamp (3) there being only one leg which projects into the cover plate (19).

8. Lamp unit according to claim 4, characterized in that the reflector (6) of the lamp (3), viewed in the opposite direction to that in which the light emerges, has its upper side wall situated approximately in line behind the collar (36).

9. Lamp unit according to any of claims 1 to 8, characterized in that the outer circumferential side wall of the reflector (6) of the lamp (3) is a section of a hollow cylinder or of a hollow cone.

10. Lamp unit according to any of claims 1 to 9, characterised in that the partition wall (18) extending between the reflectors (6) of the lamp (3) and the reflector (4) of the first headlamp (1), viewed from the front of the lamp unit, extends in the shape of an arc, with its convex face directed upwards.

11. Lamp unit according to any of claims 1 to 10, characterised in that the two dish-shaped cover plates (19, 20) bear with their circumferential outer rim against the rim of the openings (22, 23) in the frame (21) and are cemented to the latter, and that the frame (21) bears tightly against the outer rim of the housing (9) and is joined to the latter in a manner enabling it to be removed

12. Lamp unit according to claim 11, characterised in that on its outer face the frame (21) has a respective locating channel (27) surrounding the openings (22, 23), and running all round its reverse face a locating channel (24) for a ring seal, the frame (21) being an H-shaped construction except for the wall section (28) extending between the two openings (22, 23) and the open sides of the "H" constituting the respective locating channel (27 and 24, respectively).

13. Lamp unit according to any of claims 1 to 12, characterised in that the two dish-shaped cover plates (19, 20) are made in one piece thanks to at least one wall section (15) which connects them.

## Revendications

1. Bloc-phare pour véhicules à moteur, comportant un premier et un second projecteurs (1, 2) et un feu (3) disposé, en position de montage du bloc-phare, au-dessus du premier projecteur (1), ainsi qu'un boîtier (9), en forme de boisseau, commun pour les projecteurs (1, 2) et le feu (3), qu'un réflecteur (4, 5), pouvant pivoter autour d'au moins un axe, du premier et du second projecteurs (1, 2) et qu'un réflecteur (6) du feu (3), ainsi qu'une verrine d'obturation (19) en forme de coque, transparente à la lumière, qui recouvre en commun le réflecteur (4) du premier projecteur (1) et le réflecteur (6) du feu (3) et qui présente un bord latéral périphérique (25) orienté vers le boîtier (9), ainsi qu'un cadre (21) qui porte la verrine d'obturation (9), est posé, tout le tour, contre le bord extérieur du boîtier (9) et présente des ouvertures (22, 23) correspondant à la forme et à la dimension des ouvertures du passage de la lumière des réflecteurs (4, 5, 6), ainsi qu'une cloison non transparente à la lumière (18) qui est disposée entre le premier projecteur (1) et le feu (3) et qui, vu depuis la face avant du bloc-phare, atteint jusque près des bords latéraux extérieurs (25) de la verrine d'obturation (19),
caractérisé par les caractéristiques suivantes:
- le réflecteur (4, 5 ou 6) du premier et du second projecteurs (1, 2) et du feu (3) est fixé au boîtier (9) commun aux projecteurs (1, 2) et au feu (3),
- dans le cadre (21) sont prévues une première ouverture (22) commune pour le réflecteur (4) du premier projecteur (1) et pour le réflecteur (6) du feu (3) et une seconde ouverture (23) pour le réflecteur (5) du second projecteur (2),
- à chacune des deux ouvertures (22, 23) du cadre (21) est associée une verrine d'obturation (19 ou 20) en forme de coque profonde, transparente à la lumière, les verrine se limitant, par leur bord périphérique extérieur, au bord de l'ouverture respective (22 ou 23) du cadre (21),
- aux bords des deux ouvertures (22, 23) du cadre (21) est formé, tout autour, un collet (36) qui pénètre dans la verrine d'obturation en forme de coque (19 ou 20) et, par un tronçon de bordure libre (34), est orienté sur le bord périphérique du réflecteur (4 ou 5) du projecteur (1, 2),
- le réflecteur (6) du feu (3) et le réflecteur (4) du premier projecteur (1) présentent une ligne périphérique commune (16) et des tronçons de paroi latérale voisins qui, vu de l'avant du bloc-phare, se limitent l'un contre l'autre jusqu'à la ligne périphérique (16),
- la cloison (18) transparente à la lumière est formée par une paroi latérale des réflecteurs (5, 6), qui se jouxtent, du premier projecteur (1) et du feu (3).

2. Bloc-phare selon la revendication 1, comportant une plaquette (31), transparente à la lumière, qui est disposée entre le réflecteur (6) du feu (3) et la verrine d'obturation (19), est fixée au cadre (21) et, vu de l'avant du bloc-phare, recouvre la totalité de la surface de sortie de la lumière du réflecteur (6) du feu (3), caractérisé par le fait que, vu de l'avant du bloc-phare, la plaquette (31) transparente à la lumière s'étend jusqu'à la cloison latérale supérieure du réflecteur (4) du premier projecteur (1).

3. Bloc-phare selon la revendication 1 ou 2, caractérisé par le fait que la cloison (18) disposée entre le feu (3) et le premier projecteur (1) s'étend, par son tronçon d'extrémité libre, jusque dans l'ouverture (22) du cadre (21).

4. Bloc-phare selon l'une des revendications 1 à 3, caractérisé par le fait que le réflecteur (6) du feu (3) est une pièce distincte fixée au boîtier (9) et que sa paroi latérale inférieure forme la cloison (18) qui, par son tronçon d'extrémité libre (14), est orientée vers le bas et réalisée suffisamment longue pour que son tronçon d'extrémité libre (14) serve de recouvrement pour une fente (17) existant entre les deux réflecteurs (4, 6).

5. Bloc-phare selon la revendication 4, caractérisé par le fait que, par son tronçon d'extrémité libre (14) servant de recouvrement, la cloison (18) soit, en ce qui concerne ses sections prises dans le sens de la sortie de la lumière, en forme d'un arc dont la face convexe est orientée vers la verrine d'obturation (19).

6. Bloc-phare selon l'une des revendications 1 à 5, caractérisé par le fait que la face de la cloison (18) du réflecteur (6) orientée vers le haut et vers la verrine d'obturation (19) présente une surface qui correspond à une surface brillante du réflecteur (6) du feu (3) et se convertit en celle-ci et que le collet (36) formé sur les bords des deux ouvertures (22, 23) du cadre (21) présente, du côté à voir de l'avant du bloc-phare, une surface brillante qui correspond approximativement à l'aspect de la surface brillante du réflecteur (4, 5, 6).

7. Bloc-phare selon l'une des revendications 1 à 6, caractérisé par le fait que le collet (36) formé sur les bords de l'ouverture (22, 23) du cadre (21) est, au voisinage du réflecteur (4, 5) du premier et du second projecteurs (1, 2), réalisé en forme de V en coupe, la forme en V indiquant, par son sommet, le sens de la sortie de la lumière et que ce n'est qu'au voisinage du réflecteur (6) du feu (3) qu'un bord pénètre dans la verrine d'obturation (19).

8. Bloc-phare selon la revendication 4, caractérisé par le fait que, vu dans le sens opposé au sens de la sortie de la lumière, par sa paroi latérale supérieure, le réflecteur (6) du feu (3) est approximativement aligné derrière le collet (36).

9. Bloc-phare selon l'une des revendications 1 à 8, caractérisé par le fait que la paroi latérale extérieure périphérique du réflecteur (6) du feu (3) est un tronçon d'un cylindre creux ou d'un cône creux.

10. Bloc-phare selon l'une des revendications 1 à 9, caractérisé par le fait que, vu de l'avant du bloc-phare, la cloison (18) passant entre les réflecteurs (6) du feu (3) et le réflecteur (4) du premier projecteur (1) a une allure en forme d'arc, sa face convexe étant orientée vers le haut.

11. Bloc-phare selon l'une des revendications 1 à 10, caractérisé par le fait que les deux verrines d'obturation (19, 20) en forme de coque s'appuient, par leurs bords périphériques extérieurs, sur le bord des ouvertures (22, 23) du cadre (21) et sont collées à ce bord et que le cadre (21) s'appuie de façon étanche sur le bord extérieur du boîtier (9) et lui est relié de façon détachable.

12. Bloc-phare selon la revendication 11, caractérisé par le fait que, sur sa face extérieure, le cadre (21) présente une rigole réceptrice (27) entourant les ouvertures (22, 23) et, sur sa face arrière, une rigole réceptrice (24), tout autour de son bord extérieur, pour une garniture d'étanchéité annulaire, le cadre (21) étant, à l'exception du tronçon de paroi placé entre les deux ouvertures (22, 23), réalisé en forme de H en coupe, et les côtés ouverts de la forme en H formant la rigole réceptrice respective (27 ou 24).

13. Bloc-phare selon l'une des revendications 1 à 22, caractérisé par le fait que les deux verrines d'obturation (19, 20) en forme de coque sont réalisées d'une pièce par l'intermédiaire d'au moins un tronçon de paroi (15) les reliant.
